Europäisches Patentamt

European Patent Office

Office européen des brevets

(11) Publication number: **0 189 248**
**B1**

(12) **EUROPEAN PATENT SPECIFICATION**

(45) Date of publication of patent specification: **05.12.90**

(51) Int. Cl.⁵: **G 05 D 1/02**

(21) Application number: **86300094.9**

(22) Date of filing: **08.01.86**

(54) Adaptive autopilot & method of heading keeping.

(30) Priority: **18.01.85 US 692465**

(43) Date of publication of application:
**30.07.86 Bulletin 86/31**

(45) Publication of the grant of the patent:
**05.12.90 Bulletin 90/49**

(84) Designated Contracting States:
**DE FR GB NL SE**

(56) References cited:
**US-A-3 517 285**
**US-A-4 074 648**

**IBM TECHNICAL DISCLOSURE BULLETIN, vol.
19, no. 5, October 1976, pages 1572-1573; J.E.
GAFFNEY et al.: "Adaptive ship steering
characteristic"**

(73) Proprietor: **SPERRY MARINE INC.(a Delaware
Corporation)**
**1070 Seminole Trail**
**Charlottesville, Virginia 22906 (US)**

(72) Inventor: **Wesner, Charles Rufus**
**Route 3 - Box 504**
**Crozet Virginia 22932 (US)**
Inventor: **Coleman, Albert Luin**
**Route 1 - Box 642**
**Scottsville Virginia 24590 (US)**
Inventor: **Yancey, John Farrar**
**1616 Cambridge Circle**
**Charlottesville Virginia 24590 (US)**

(74) Representative: **Singleton, Jeffrey et al**
**Eric Potter & Clarkson St. Mary's Court**
**St. Mary's Gate**
**Nottingham NG1 1LE (GB)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

**Description**

The present invention relates to autopilot steering systems for marine vessels and more specifically to an autopilot that selects an optimum rudder activity position to minimise propulsion losses due to hull and rubber drag. The invention also relates to a method of heading keeping for a marine vessel.

The operating efficiency of a marine vessel depends in large part on minimising propulsion losses generated by resistance to forward motion of the vessel. The total vessel resistance to forward motion may be considered as the sum of resistance of hull and rudder. Hull resistance is substantially a constant, being a function of hull design and loading. Therefore, in operation, only the rudder activity may be controlled to minimise overall resistance to forward motion.

For given operating conditions, resistance of a vessel to forward motion increases as yaw increases. Increasing the rudder activity in an effort to decrease yaw also increases resistance to forward motion. Therefore, optimum operating efficiency requires a balance between rudder activity and allowable yaw.

A prior autopilot seeking to accomplish the objective of balancing allowable yaw and rudder activity to yield a minimum resistance to forward motion is embodied in Applicant's US—A—4,074,648. This autopilot adjusts the sensitivity of the vessel's steering system to accommodate changes in speed, sea and wind conditions to provide a balance between yaw motion and rudder activity. However, with this prior autopilot, a detailed knowledge of the vessel's dynamic performance characteristics and extensive computer simulation is required to formulate the equations used to optimise the operating efficiency of any given vessel. Furthermore, if the simulations do not match a vessel's actual peformance, there are no corrections or calibration available to adjust the predicted performance to the actual performance so that operating efficiency of the vessel may be maximised.

The present invention, which is defined in the appended claims, provides an adaptive autopilot for a marine vessel wherein the optimum rudder activity to obtain the least combined hull and rudder drag is determined by a series of steps starting with the rudder position which yields the least yaw motion and continuing in steps until a rudder activity is obtained that yields the least resistance to forward motion of the vessel and still maintains heading control. With the present invention, a digital computer and its associated algorithm are adaptable to many types of vessels. No prior knowledge of a given vessel's characteristics are required and no computer simulation of a vessel's operating performance is required to practice the present invention.

An adaptive autopilot in accordance with the present invention will now be described in greater detail, by way of example, with reference to the accompanying drawings, in which:—

Figure 1 is a block diagram of the adaptive steering autopilot, and

Figure 2 is a block diagram of the adaptive steering autopilot gain adjust module.

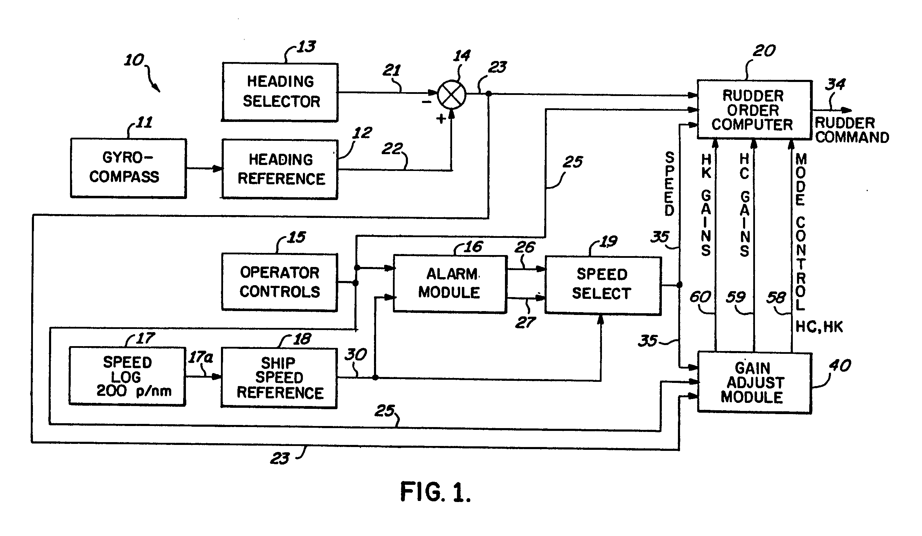

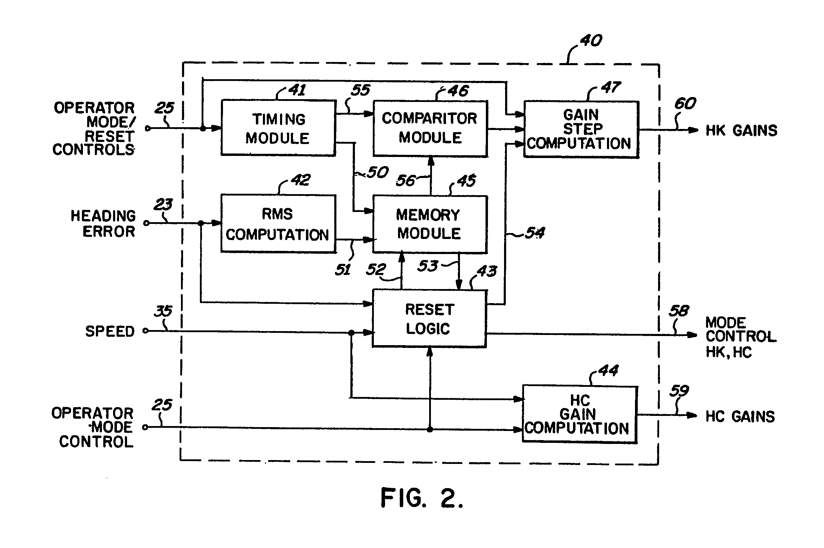

To simplify the understanding of the present invention, it will be explained by using a generally analogue format as shown in Figures 1 and 2. It will be understood, however, that the present invention may be implemented by use of a programmable digital computer wherein the various analogue inputs are converted to a digital format for processing and the digital output is converted to an analogue signal to drive the rudder order apparatus.

Referring now to the adaptive autopilot 10 shown in Figure 1, a heading selector 13 provides a heading selector signal 21 to a summation device 14. A heading reference signal 22, derived from the ship's gyrocompass 11 and heading reference circuit 12, is also input to the summation device 14. A heading error signal 23 representing the difference between input signals 21 and 22 is provided to a rudder order computer 20 and a gain adjust module 40. Mode control signals 25 are provided by an operator control circuit 15 and applied simultaneously to the rudder order computer 20, an alarm module 16, and the gain adjust module 40. A ship speed log 17 provides pulse data 17a to a ship's speed reference circuit 18 which in turn provides a ship speed signal 30 simultaneously to the alarm module 16 and a speed select circuit 19. The alarm module 16 provides a default speed signal 26 and a speed log alarm signal 27 to the speed select circuit 19. Speed select circuit 19 provides a selected speed signal 35 to the rudder order computer 20 and to the gain adjust module 40. The gain adjust module 40 provides mode control signals 58 for heading change (HC) and heading keeping (HK), a heading change gain signal 59, and a heading keeping gain signal 60 to the rudder order computer 20, the output of which is a rudder command signal 34.

Referring now to Figure 2, the gain adjust module 40 accepts input of operator mode/reset control signal 25, heading error signal 23, and ship's speed signal 35. The gain adjust module 40 calculates, in accordance with the following description, the heading keeping gain signal 60, the heading change gain signal 59, and the heading keeping and heading change mode control signals 58.

In operation, the present invention searches for the optimal rudder setting in three stages or modes. In mode 1, the root mean square (RMS) value of the heading error signal 23 is computed in a block 42 and output to a memory module 45 via a lead 51. A timing module 41 determines the pre-selected duration for mode 1 and outputs timing signals on leads 50 and 55. The RMS heading error signal 51 stored in the memory module 45 during mode 1 is the reference RMS heading error signal measured at maximum rudder order signal gain. At the end of the initial measuring period (mode 1), the timing module 41 initiates mode 2. In mode 2, a current RMS heading error signal 51 is computed from the heading error signal 23 over a pre-selected time determined by the timing module 41, and stored in the memory module 45. The memory module 45 outputs both the reference RMS heading error signal and the current RMS heading

2

error signal to a comparator module 46 on a lead 56. If the current RMS heading error signal exceeds the reference RMS heading error signal by a pre-determined ratio, for example 130%, then the comparator module 46 outputs a signal to a gain step computation module 47 which increases the gain by one step, outputs the new heading keeping gain 60, and mode 3, to be described later, is initiated. If the current RMS heading error signal does not exceed the reference heading error RMS signal by a predetermined amount, then the heading keeping gain 60 is reduced one step and a new comparison is made by the comparator module 46 for a duration determined by the timing module 41. If the minimum heading keeping gain 60 is reached after a sequence of step reductions, the mode is changed to No. 3. If the value of the current RMS heading error signal is less than 0.7 degrees, the heading keeping gain 60 is reduced by one step by the gain step computation module 47. If the value of the current RMS heading error signal exceeds 0.7 degrees and the gain step was reduced on the previous time step by this 0.7 degree criteria, then the heading keeping gain 60 is increased by one step.

If the current peak heading error signal exceeds a predetermined value, for example, three times the previous RMS heading error signal, or the current heading rate of change exceeds a predetermined value, for example three times the previous RMS heading rate signal, and the previous RMS heading error signal is greater than a predetermined amount, for example 1.0 degree, then the autopilot is reset to mode 1 and a new reference heading error signal is established.

The reset logic 43 accepts inputs of the ship's speed signal 35, the operator mode control signal 25, the heading error signal 23, and an input from the memory module 45 on the lead 53. The reset logic 43 directs switching between modes 1, 2 and 3 by output to the memory module 45 on the lead 52, output to the gain step computation module 47 on lead 54, and mode control output 58 to the rudder order computer 20. The heading change computation module 44 accepts the ship's speed signal 35 and the operator mode control signal 25 and provides a heading change gain signal 59.

The steady state or mode 3 will now be described. Current values of RMS heading error signal and heading error rate of change signal are monitored by the gain adjust module 40. If the heading keeping gain 60 is not at a minimum and the current RMS heading error signal is less than, for example, one-half of the reference RMS heading error signal, then mode 1 is initiated. If the current RMS heading error signal is greater than, for example, one degree, and the current RMS heading error signal is greater than, for example, 1.5 times the reference RMS heading error signal, then mode 1 is initiated.

The adaptive autopilot described is calibrated to establish allowable minimum and maximum rudder order signal gains under a plurality of ship load conditions at the ship's design speed in substantially calm seas.

It will be appreciated that all the functions shown in Figures 1 and 2 may preferably be implemented by a digital computer program. The digital computer program listed subsequently on pages 4 to 13 is given in sufficient detail to enable those skilled in the art to carry it out. The digital computer program is written in assembly language and may be executed by a number of suitable digital processing systems, for example, the Intel 8085 microprocessor.

```
G*DOCSYM(41.1807218-(0)
              TITLE   'GAINS  - ASC GAIN UPDATE PROCESSING - 1807218'
              NAME    GAINS
      ;
      ;  ABSTRACT
      ;  --------
      ;    ** PROCEDURE DEFINITION ** MODULE
      ;    GAINS PERFORMS THE ASC GAIN UPDATE PROCESSING.
      ;
      ;
      ;  APPLICABLE SPECIFICATIONS
      ;  -------------------------
      ;    NONE
      ;
      ;
      ;  COMPUTER ENVIRONMENT
      ;  --------------------
      ;    INTEL 8085 MICROPROCESSOR (OR EQUIVALENT)
      ;    INTEL 8085 MICROPROCESSOR RELOCATABLE MACROASSEMBLY LANGUAGE
      ;      (CODING CONFORMS TO MICROTEC SUBSET)
      ;
      ;    MACRO DEFINITIONS PROGRAM PART DRAWING(S) SOURCE CODE:
      ;      1807224-  MACRO - ASC MACRO DEFINITIONS
      ;    MUST BE COMBINED WITH THIS DRAWING'S SOURCE CODE PRIOR TO
      ;    EXECUTING THE SOFTWARE ASSEMBLY PROGRAM TOOL.
      ;
      ;
      ;  REVISION RECORD
      ;  ---------------
      ;    REV     ENGINEER        DATE
      ;
      ;    -     J YANCEY       29 NOV 83
      ;  ORIGINAL RELEASE
      ;
          EJEC
      ;  PUBLIC ROUTINES
      ;  ---------------
          PUBLIC  INITGN  INITIALIZE GAINS MODULE
          PUBLIC  GAINS   UPDATE ASC GAINS
      ;
      ;  EXTERNAL ROUTINES
      ;  -----------------
          EXTRN   JIO     JUMP ON INPUT SWITCH STATUS
          EXTRN   RDIO    READ INPUT SWITCH STATUS
          EXTRN   READS2  READ SWITCH S2
          EXTRN   INQUAD  INITIALIZE QUADRATIC FILTER
          EXTRN   QUADF   QUADRATIC STAGE DIGITAL FILTER
          EXTRN   QUADF1  QUADRATIC STAGE DIGITAL FILTER 1
          EXTRN   GETP    GET SELECTED PARAMETER
          EXTRN   RSETGN  RESET ADAPTIVE SEARCH GAINS
          EXTRN   FCMP    FLOATING POINT COMPARE: AX TO (DE)
          EXTRN   FCMA    FLOATING POINT COMPLEMENT: AX <- -AX
          EXTRN   FSQRT   FLOATING POINT SQUARE ROOT ROUTINE
          EXTRN   FABS    FLOATING POINT ABSOLUTE VALUE: AX <- ABS(AX)
      ;
      ;  EXTERNAL DATA
      ;  -------------
```

4

```
;            NAME     TYPE    DESCRIPTION                              SCALE   UNITS
;            ----     ----    -----------                             -----   -----
     EXTRN   HETOL    (I)     MIN HE-RMS FOR SEARCH RESET TEST        FLT     DEG
     EXTRN   STEP     (IO)    ADAPTIVE GAIN SEARCH INDEX              B7      NONE
     EXTRN   MXSTEP   (I)     MAX ADAPTIVE GAIN SEARCH INDEX          B7      NONE
     EXTRN   STPDSP   (I)     GAIN SELECT INDEX DISPLAY SELECT        B7      NONE
     EXTRN   CTRLM    (I)     CONTROLLER MODE                         B7      NONE
     EXTRN   HCMOD    (I)     CONTROLLER MODE = HC                    B7      NONE
     EXTRN   CWMOD    (I)     CONTROLLER MODE = CW                    B7      NONE
     EXTRN   GSSTAT   (IO)    GAIN SEARCH STATE                       B7      NONE
     EXTRN   GSSTRT   (I)     GAIN SEARCH STATE = START               B7      NONE
     EXTRN   GSSRCH   (I)     GAIN SEARCH STATE = SEARCH              B7      NONE
     EXTRN   GSSTAB   (I)     GAIN SEARCH STATE = STABLE              B7      NONE
     EXTRN   CTLOCK   (I)     CONTROLLER LOCK SWITCH                  B7      NONE
     EXTRN   SLWINC   (I)     SLEW INCREASE SWITCH                    B7      NONE
     EXTRN   SLWDEC   (I)     SLEW DECREASE SWITCH                    B7      NONE
     EXTRN   LOAD     (I)     LOAD CONDITION SWITCH                   B7      NONE
     EXTRN   WADJST   (I)     WEATHER ADJUST MODE SWITCH              B7      NONE
     EXTRN   ADAPTV   (I)     WADJST SWITCH = ADAPTV                  B7      NONE
     EXTRN   ON       (I)     SWITCH = ON INDEX                       B7      NONE
     EXTRN   OFF      (I)     SWITCH = OFF INDEX                      B7      NONE
     EXTRN   GSRSET   (IO)    GAIN SEARCH RESET FLAG                  BOOL    N/A
     EXTRN   HE       (I)     HEADING ERROR                           FLT     DEG
     EXTRN   HEDOT    (I)     HEADING ERROR RATE                      FLT     DEG/SEC
         EJEC
;
;   LOCAL ROUTINES
;   --------------
;           RSTSCH   RESET GAIN SEARCH
;           UPDSCH   UPDATE GAIN SEARCH
;
;
;   LOCAL DATA
;   ----------
;
;       VARIABLES
;
         DSEG
         PUBLIC   UPDTMR,ITOL,HERMS,HEDRMS,HERO,HEA,HE2A,HEDA
         PUBLIC   HED2A
LDLAST DS        1               ;PREV LOAD CONDITION
UPDTMR DS        2               ;GAIN SEARCH UPDATE TIMER
ITOL   DS        1               ;IMPROVING SEARCH MODE FLAG
HERMS  DS        4               ;HEADING ERROR RMS
HEDRMS DS        4               ;HEADING ERROR RATE RMS
HERO   DS        4               ;HEADING ERROR RMS - BASELINE
HEA    DS        4               ;HEADING ERROR AVERAGE
HE2A   DS        4               ;HEADING ERROR**2 AVERAGE
HEDA   DS        4               ;HEADING ERROR RATE AVERAGE
HED2A  DS        4               ;HEADING ERROR RATE**2 AVERAGE
;
U1HE   DS        4               ;HE FILTER U1
U2HE   DS        4               ;HE FILTER U2
U1HE2  DS        4               ;HE*HE FILTER U1
U2HE2  DS        4               ;HE*HE FILTER U2
U1HED  DS        4               ;HEDOT FILTER U1
U2HED  DS        4               ;HEDOT FILTER U2
```

5

```
U1HED2 DS      4              ;HEDOT*HEDOT FILTER U1
U2HED2 DS      4              ;HEDOT*HEDOT FILTER U2
;
;      CONSTANTS
;
       CSEG
TRUE   EQU     1              ;TRUE VALUE
FALSE  EQU     0              ;FALSE VALUE
UPDTMI EQU     600            ;START MEASUREMENT PERIOD (SEC)
UPDTMX EQU     300            ;NORMAL MEASUREMENT PERIOD (SEC)
;
PEAK   FLT     0C0H,0,0,2     ;HE/HERMS, HEDOT/HEDRMS RESET RATIO (3.0
RMIN   FLT     80H,0,0,0      ;SEARCH RESET MIN RATIO HERMS/HERO (0.5)
RMAX   FLT     0C0H,0,0,1     ;SEARCH RESET MAX RATIO HERMS/HERO (1.5)
PSVAL  FLT     0B3H,33H,33H,0 ;PRE-EMPTIVE SEARCH VAL FOR HERMS (0.7)
RSTOP  FLT     0A6H,66H,66H,1 ;GAIN SEARCH STOP RATIO HERMS/HERO (1.3)
;
A0     FLT     86H,20H,0,6FH  ;A0 FILTER CONSTANT (3.9972365E-6)
A1     FLT     80H,0,0,2      ;A1 FILTER CONSTANT (2.0)
A2     FLT     80H,0,0,1      ;A2 FILTER CONSTANT (1.0)
B1     FLT     0FFH,46H,6AH,81H ;B1 FILTER CONSTANT (-1.9943364)
B2     FLT     0FEH,8DH,0E1H,0 ;B2 FILTER CONSTANT (.99435243)
       EJEC
;
;      FILTER RECORDS
;
HEFL   DW8     U1HE,U2HE,A0,A1,A2,B1,B2,HEA
HE2FL  DW8     U1HE2,U2HE2,A0,A1,A2,B1,B2,HE2A
HEDFL  DW8     U1HED,U2HED,A0,A1,A2,B1,B2,HEDA
HED2FL DW8     U1HED2,U2HED2,A0,A1,A2,B1,B2,HED2A
       EJEC
;
;   INITGN - INITIALIZE GAINS MODULE
;
;   CALLING SEQUENCE:
;       CALL    INITGN         ;INIT GAINS MODULE
;
;   REGISTERS ALTERED:
;       A
;
;   CODE
;       GSRSET <- TRUE         -- SET SEARCH RESTART FLAG
;       STEP <- 0              -- RESET GAIN SELECT
;
;       INQUAD(HEFL)           -- INIT PERFORMANCE FILTERS
;       INQUAD(HE2FL)
;       INQUAD(HEDFL)
;       INQUAD(HED2FL)
;   END
;
INITGN
       MOVI    GSRSET,TRUE    ;GSRSET <- TRUE
       MOVI    STEP,0         ;STEP <- 0
;
       INQUAD  HEFL           ;INIT PERFORMANCE FILTERS
       INQUAD  HE2FL
       INQUAD  HEDFL
```

```
            INOUAD   HED2FL
            RET
            EJEC
    ;
    ; GAINS - UPDATE ASC GAINS
    ;
    ; CALLING SEQUENCE:
    ;     CALL     GAINS           ;UPDATE ASC GAINS
    ;
    ; REGISTERS ALTERED:
    ;     ALL,AX,RXU,RXL,RX3,RX4
    ;
    ; CODE
    ;   CASE CTRLM OF
    ;   HCMOD:
    ;     IF CTLOCK=ON THEN
    ;         GSRSET <- TRUE              -- SET GAIN SEARCH RESET FLAG
    ;   CWMOD:
    ;     GSRSET <- TRUE                  -- SET GAIN SEARCH RESET FLAG
    ;   OSMOD:
    ;     IF LOAD <> LOLAST THEN          -- LOAD CONDITION CHANGE
    ;         LDLAST <- LOAD             -- UPDATE PREV LOAD
    ;         GSRSET <- TRUE             -- SET GAIN SEARCH RESET FLAG
    ;
    ;     IF CTLOCK = ON THEN             -- CONTROLLER LOCKED
    ;         GSRSET <- TRUE             -- SET GAIN SEARCH RESET FLAG
    ;         STEP <- 0                  -- RESET GAIN SELECT
    ;
    ;     ELSIF WADJST = MANUAL THEN      -- MANUAL GAIN SELECT
    ;         GSRSET <- TRUE             -- SET GAIN SEARCH RESET FLAG
    ;         RSETGN                     -- RESET ADAPTIVE SEARCH GAINS
    ;         IF S2 = STPOSP THEN        -- GAIN SELECT CHOSEN
    ;             IF SLWINC = ON THEN
    ;                 IF STEP > 0 THEN
    ;                     STEP <- STEP - 1
    ;             ELSIF SLWDEC = ON THEN
    ;                 IF STEP < MXSTEP THEN
    ;                     STEP <- STEP + 1
    ;
    ;     ELSIF GSRSET THEN
    ;         GSRSET <- FALSE
    ;         RSTSCH                                     -- RESTART GAIN SEARCH
    ;
    ;     ELSE                                           -- UPDATE GAIN SEARCH
    ;         UPDSCH
    ; END
    ;
GAINS
        LDA      CTRLM           ;CTRLM = WCMOD ?
        CPI      >HCMOD
        JNZ      GN1             ;NO
    ;
        JIO      CTLOCK,ON,GNO   ;CTLOCK = ON ?
        RET                      ;NO
GNO
        MOVI     GSRSET,TRUE     ;GSRSET <- TRUE
        RET
```

7

```
GN1
        CPI     >CWMOD          ;CTRLM = CWMOD ?
        JNZ     GN2             ;NO
;
        MOVI    GSRSET,TRUE     ;GSRSET <- TRUE
        RET
GN2
        RDIO    LOAD            ;LOAD = LDLAST ?
        LXI     H,LDLAST
        CMP     M
        JZ      GN3             ;YES
;
        MOV     M,A             ;LDLAST <- LOAD
        MOVI    GSRSET,TRUE     ;GSRSET <- TRUE
GN3
        JIO     CTLOCK,OFF,GN4  ;CTLOCK = OFF ?
;
        MOVI    GSRSET,TRUE     ;NO - GSRSET <- TRUE
        MOVI    STEP,0          ;STEP <- 0
        RET
GN4
        JIO     WADJST,ADAPTV,GN7 ;WADJST = ADAPTV ?
;
        MOVI    GSRSET,TRUE     ;NO - GSRSET <- TRUE
        CALL    RSETGN          ;RESET ADAPTIVE SEARCH GAINS
        CALL    READS2          ;S2 = STPDSP ?
        CPI     >STPDSP
        RNZ                     ;NO
;
        LXI     H,STEP          ;SLEW AS REQUESTED
        JIO     SLWINC,ON,GN6
        JIO     SLWDEC,ON,GN5
        RET
GN5
        INR     M               ;STEP <- STEP+1
        LDA     MXSTEP          ;STEP <= MXSTEP ?
        CMP     M
        RP                      ;YES
        MOV     M,A             ;NO - STEP <- MXSTEP
        RET
GN6
        DCR     M               ;STEP <- STEP-1
        XRA     A               ;STEP > 0 ?
        CMP     M
        RM                      ;YES
        MOV     M,A             ;NO - STEP <- 0
        RET
GN7
        LXI     H,GSRSET        ;GSRSET ?
        MVI     A,FALSE
        CMP     M
        JZ      GS8             ;NO
;
        MOV     M,A             ;YES - GSRSET <- FALSE
        CALL    RSTSCH          ;RESTART GAIN SEARCH
        RET
GS8
```

8

```
        CALL    UPDSCH          ;UPDATE GAIN SEARCH
        RET
        EJEC
;
;   RSTSCH - RESET GAIN SEARCH
;
;   CALLING SEQUENCE:
;       CALL    RSTSCH          ;RESET GAIN SEARCH
;
;   REGISTERS ALTERED:
;       ALL,AX,RXO,RX3
;
;   CODE
;      GSSTAT <- GSSTRT              -- SET GAIN SEARCH STATE TO START
;      STEP <- 0                     -- INIT SEARCH STEP TO MAX GAINS
;      ITOL <- FALSE                 -- PREEMPTIVE SEARCH <- FALSE
;      RSETGN                        -- RESET ADAPTIVE SEARCH GAINS
;      UPDTMR <- UPDTMI              -- SET GAIN UPDATE TIMER (START PERIOD)
;   END
;
RSTSCH
        MOVI    GSSTAT,GSSTRT ;GSSTAT <- GSSTRT
        MOVI    STEP,0          ;STEP <- 0
        MOVI    ITOL,FALSE      ;ITOL <- FALSE
        CALL    RSETGN          ;RESET ADAPTIVE SEARCH GAINS
        LXI     H,UPDTMI        ;UPDTMR <- UPDTMI
        SHLD    UPDTMR
        RET
        EJEC
;
;   UPDSCH - UPDATE GAIN SEARCH
;
;   CALLING SEQUENCE:
;       CALL    UPDSCH          ;UPDATE GAIN SEARCH
;
;   REGISTERS ALTERED:
;       ALL,AX,RXO,RX1,RX3,RX4
;
;   CODE
;      QUADF(HE,HEFL)               -- FILTER HE
;      QUADF(HE*HE,HE2FL)           -- FILTER HE*HE
;      QUADF(HEDOT,HEDFL)           -- FILTER HEDOT
;      QUADF(HEDOT*HEDOT,HED2FL)    -- FILTER HEDOT*HEDOT
;
;      HERMS <- SQRT(HE2A - HEA*HEA)        -- RMS HE
;      HEDRMS <- SQRT(HED2A - HEDA*HEDA)  -- RMS HE RATE
;
;      UPDTMR <- UPDTMR - 1         -- DEC GAIN UPDATE TIMER
;      IF UPDTMR = 0 THEN           -- TIME FOR GAIN SEARCH UPDATE
;          UPDTMR <- UPDTMX         -- RESET TIMER
;
;          CASE GSSTAT OF
;          GSSTRT:
;              HERO <- HERMS                -- SET BASELINE PERFORMANCE
;              IF STEP = MXSTEP THEN        -- MIN GAINS ALREADY
;                  GSSTAT <- GSSTAB         -- TERMINATE SEARCH
;              ELSE
```

```
;                   STEP <- STEP + 1         -- REDUCE GAINS
;                   GSSTAT <- GSSRCH         -- ENTER SEARCH MODE
;
;         GSSRCH:
;            IF HERMS < PSVAL THEN           -- PREEMPTIVE SEARCH
;               IF STEP = MXSTEP THEN        -- MIN GAINS ALREADY
;                  GSSTAT <- GSSTAB          -- TERMINATE SEARCH
;               ELSE
;                  ITOL <- TRUE              -- ALLOW PREEMPTIVE SEARCH
;                  STEP <- STEP + 1          -- REDUCE GAINS
;
;            ELSIF ITOL THEN                 -- PREV IN PREEMPTIVE SEARCH
;               ITOL <- FALSE                -- EXIT PREEMPTIVE SEARCH
;               STEP <- STEP - 1             -- INC GAINS - NORMAL SEARCH CONTINUES
;            ELSIF HERMS/HERO > RSTOP THEN   --.DEGRADED PERFORMANCE
;               GSSTAT <- GSSTAB             -- TERMINATE SEARCH
;               STEP <- STEP - 1             -- INC GAINS TO PREV STEP
;            ELSIF STEP = MXSTEP THEN        -- MIN GAINS ALREADY
;               GSSTAT <- GSSTAB             -- TERMINATE SEARCH
;            ELSE
;               STEP <- STEP + 1             -- REDUCE GAINS - CONTINUE SEARCH
;
;         GSSTAB:
;            NULL
      EJEC
;
;      IF GSSTAT = GSSTAB THEN
;         IF STEP <> MXSTEP AND HERMS/HERO < RMIN THEN
;            RSTSCH                          -- RESTART SEARCH
;         IF HERMS > HETOL AND HERMS/HERO > RMAX THEN
;            RSTSCH                          -- RESTART SEARCH
;
;      IF GSSTAT >= GSSRCH AND HERMS > HETOL AND
;      (ABS(HE/HERMS) > PEAK OR ABS(HEDOT/HEDRMS) > PEAK) THEN
;         RSTSCH                             -- RESTART SEARCH
;  END
;
UPDSCH
      QUADF    HE,HEFL        ;UPDATE HE FILTER
      FLDA     HE             ;UPDATE HE*HE FILTER
      CMPY
      QUADF1   HE2FL
;
      QUADF    HEDOT,HEDFL    ;UPDATE HE-RATE FILTER
      FLDA     HEDOT          ;UPDATE HE-RATE**2 FILTER
      CMPY
      QUADF1   HED2FL
;
      FLDA     HEA            ;COMPUTE HE RMS
      CMPY
      FCMA
      FADD     HE2A
      FSQRT
      FSTA     HERMS          ;HERMS <- HE RMS
;
      FLDA     HEDA           ;COMPUTE HE RATE RMS.
      CMPY
```

```
399             FCMA
400             FADD    HED2A
401             FSQRT
402             FSTA    HEDRMS          ;HEDRMS <- HE RATE RMS
403     ;
404             LHLD    UPDTMR          ;DEC GAIN SEARCH UPDATE TIMER
405             DCX     H
406             SHLD    UPDTMR
407             MOV     A,H             ;UPDTMR = 0 ?
408             ORA     L
409             JNZ     US8             ;NO
410     ;
411             LXI     H,UPDTMX        ;YES - RESET TIMER
412             SHLD    UPDTMR
413     ;
414             LDA     GSSTAT          ;GSSTAT = GSSTRT ?
415             CPI     >GSSTRT
416             JNZ     USO             ;NO
417     ;
418             FMOV    HERMS,HERO      ;HERO <- HERMS (BASELINE PERFORMANCE)
419             LXI     H,STEP          ;STEP = MXSTEP ?
420             LDA     MXSTEP
421             CMP     M
422             MVI     A,>GSSTAB
423             JZ      USOO            ;YES - TERMINATE SEARCH
424     ;
425             INR     M               ;NO - REDUCE GAINS
426             MVI     A,>GSSRCH       ;GSSTAT <- GSSRCH (SEARCH MODE)
427     USOO
428             STA     GSSTAT
429             JMP     US6
430     USO
431             CPI     >GSSRCH         ;GSSTAT = GSSRCH ?
432             JNZ     US6             ;NO
433     ;
434             FLDA    HERMS           ;HERMS < PSVAL ?
435             FCMP    PSVAL
436             JP      US2             ;NO
437     ;
438             LXI     H,STEP          ;STEP = MXSTEP ?
439             LDA     MXSTEP
440             CMP     M
441             JNZ     US1             ;NO
442     ;
443             MOVI    GSSTAT,GSSTAB   ;YES - TERMINATE SEARCH (MIN GAINS)
444             JMP     US6
445     US1
446             INR     M               ;TISEL <- TISEL + 1 (REDUCE GAINS)
447             MOVI    ITOL,TRUE       ;PREEMPTIVE SEARCH
448             JMP     US6
449     US2
450             LDA     ITOL            ;PREV PREEMPTIVE SEARCH ?
451             CPI     TRUE
452             JNZ     US3             ;NO
453     ;
454             MOVI    ITOL,FALSE      ;YES - END PREEMPTIVE SEARCH
455             LXI     H,STEP          ;STEP <- STEP - 1 (INC GAINS - NORMAL SEARCH)
```

EP 0 189 248 B1

```
         OCR     M
         JMP     US6
US3
         FLDA    HERMS            ;HERMS/HERO > RSTOP ?   (DEGRADED PERFORMANCE)
         FDIV    HERO
         FCMP    RSTOP
         JM      US4             ;NO
;
         MOVI    GSSTAT,GSSTAB   ;YES - TERMINATE SEARCH
         LXI     H,STEP          ;STEP <- STEP - 1 (INC GAINS)
         DCR     M
         JMP     US6
US4
         LXI     H,STEP          ;STEP = MXSTEP ?
         LDA     MXSTEP
         CMP     M
         JNZ     US5             ;NO
;
         MOVI    GSSTAT,GSSTAB   ;YES - TERMINATE SEARCH
         JMP     US6
US5
         INR     M               ;T1SEL <- T1SEL + 1 (REDUCE GAINS - CONTINUE SE
US6
         LDA     GSSTAT          ;GSSTAT = GSSTAB ?
         CPI     >GSSTAB
         JNZ     US8             ;NO
;
         LDA     STEP            ;STEP = MXSTEP ?
         LXI     H,MXSTEP
         CMP     M
         JZ      US7             ;YES
;
         FLDA    HERMS           ;HERMS/HERO < RMIN ?
         FDIV    HERO
         FCMP    RMIN
         JM      US9             ;YES - RESTART SEARCH
US7
         GETP    HETOL           ;HERMS > HETOL ?
         FCMP    HERMS
         JP      US8             ;NO
;
         CLDA                    ;HERMS/HERO > RMAX ?
         FDIV    HERO
         FCMP    RMAX
         JP      US9             ;YES - RESTART SEARCH
US8
         LDA     GSSTAT          ;GSSTAT >= GSSRCH ?
         CPI     >GSSRCH
         JC      US10            ;NO - SKIP PEAK TEST
;
         GETP    HETOL           ;HERMS < HETOL ?
         FCMP    HERMS
         JP      US10            ;YES - SKIP PEAK TEST
;
         FLDA    HE              ;ABS(HE/HERMS) > PEAK ?
         FDIV    HERMS
         FABS
```

12

```
513          FCMP    PEAK
514          JP      US9       ;YES — RESTART SEARCH
515      ;
516          FLDA    HEDOT     ;ABS(HEDOT/HEDRMS) > PEAK ?
517          FDIV    HEDRMS
518          FABS
519          FCMP    PEAK
520          JM      US10      ;NO
521   US9
522          CALL    RSTSCH    ;YES — RESTART SEARCH
523   US10
524          RET
525          END
```

## Claims

1. A method of heading keeping to minimise propulsion losses in a marine vessel utilising an adaptive autopilot that has been calibrated to establish allowable minimum and maximum signal gains applied to rudder order signals, characterised in that it comprises the steps of establishing a plurality of intermediate rudder order signal gain values lying between said minimum and maximum rudder order signal gains, measuring a reference heading error signal over a selected time period, subsequently comparing the reference heading error signal with a current heading error signal, increasing or decreasing the rudder order signal gain to one of the intermediate rudder order signal gain values in response to the comparison of the reference and current heading error signals for providing an optimum rudder order signal gain that minimises propulsion losses, and maintaining the optimum rudder order signal gain until changing conditions cause the comparison of the reference and current heading error signals to exceed a predetermined limit thereby initiating selection of a new optimum rudder order signal gain for controlling the rudder so as to provide said heading keeping.

2. A method according to Claim 1, characterised in that the reference heading error signal is measured at the maximum rudder order signal gain.

3. A method according to Claim 1 or 2, characterised in that calibration of the adaptive autopilot includes calibration under a plurality of ship load conditions at ship's design speed in substantially calm seas.

4. A method according to any of the preceding Claims, characterised in that the previously selected intermediate rudder order signal gain value is increased to a next higher value if the current heading error signal exceeds the reference heading error signal by approximately 30 percent.

5. A method according to any of the preceding Claims, characterised in that a new reference heading error signal is measured when a current heading error peak signal exceeds a current heading error RMS signal by a factor of 3, and a current heading error RMS signal is greater than approximately 1 degree.

6. A method according to Claim 5, characterised in that a new reference heading error signal is measured when a current heading rate peak signal exceeds a current heading rate RMS signal by a factor of 3 and a current heading error RMS signal is greater than approximately 1 degree.

7. A method according to any of the preceding Claims, characterised in that the reference and current headings error signals comprise RMS signals.

8. An adaptive autopilot for use in a marine vessel to provide heading keeping to minimise propulsion losses characterised in that the autopilot is calibrated to establish allowable minimum and maximum signal gains applied to rudder order signals, and in that it comprises means (40) for establishing a plurality of intermediate rudder order signal gain values lying between said minimum and maximum rudder order signal gains, means (11, 12) for measuring a reference heading error signal over a selected time period, means (14) for subsequently comparing the reference heading error signal with a current heading error signal, means (20) for increasing or decreasing the rudder order signal gain in said intermediate values to one of those values in response to the comparison of the reference heading and the current heading error signals for providing an optimum rudder order signal gain that minimises propulsion losses, and means (40) for maintaining said optimum rudder order signal gain until changing conditions cause the comparison of the reference and current heading error signals to exceed a predetermined limit thereby initiating selection of a new optimum rudder order signal gain for controlling the rudder so as to provide said heading keeping.

9. An adaptive autopilot according to Claim 8, characterised in that calibrating the adaptive autopilot includes calibration under a plurality of ship load condition at ship's design speed.

10. An adaptive autopilot according to Claim 8 or 9, characterised in that the reference heading error signal is measured with the rudder order signal gain at maximum.

11. An adaptive autopilot according to any of Claims 8 to 10, characterised in that a current intermediate gain value is increased by 1 if the current heading error signal exceeds the reference heading error signal by approximately 30 percent.

12. An adaptive autopilot according to any of Claims 8 to 11, characterised in that a new reference

13

heading error signal is measured when a current heading error peak signal exceeds a current heading error RMS signal by a factor of 3, and a current heading error RMS signal is greater than approximately 1 degree.

13. An adaptive autopilot according to Claim 12, characterised in that a new reference heading error signal is measured when a current heading rate peak signal exceeds a current heading rate RMS signal by a factor of 3, and a current heading error RMS signal is greater than approximately 1 degree.

14. An adaptive autopilot according to any of Claims 8 to 13, characterised in that the reference and current heading error signals comprise RMS signals.


**Patentansprüche**

1. Verfahren zur Beibehaltung des Steuerkurses zur weitgehenden Verringerung von Vorschubverlusten bei einem Schiff, das einen adpativen Autopiloten verwendet, der so kalibriert ist, daß er zulässige minimale und maximale Signalverstärkungen ausbildet, die auf Ruderbefehlssignale angewandt werden, dadurch gekennzeichnet, daß das Verfahren die Schritte der Ausbildung einer Vielzahl von Ruderbefehlssignalverstärkungs-Zwischenwerten, die zwischen den minimalen und maximalen Ruderbefehlssignalverstärkungen liegen, der Messung eines Bezugs-Steuerkursfehlersignals über eine ausgewählte Zeitperiode, des nachfolgenden Vergleichs des Bezugs-Steuerkursfehlersignals mit einem aktuellen Steuerkursfehlersignal, der Vergrößerung oder Verkleinerung der Ruderbefehlssignalverstärkung auf einen der Ruderbefehlssignalverstärkungs-Zwischenwerte in Abhängigkeit von dem Vergleich der Bezugs-Steuerkursfehlersignale mit den aktuellen Steuerkursfehlersignalen zur Lieferung einer optimalen Ruderbefehlssignalverstärkung, die Vortriebsverlust zu einem Minimum macht, und der Beibehaltung der optimalen Ruderbefehlssignalverstärkung einschließt, bis sich ändernde Bedingungen bewirken, daß der Vergleich der Bezugs-Steuerkursfehlersignale und der aktuellen Steuerkursfehlersignale einen vorgegebenen Grenzwert übersteigt, wodurch die Auswahl einer neuen optimalen Ruderbefehlssignalverstärkung eingeleitet wird, um das Ruder derart zu steuern, daß die genannte Steuerkursbeibehaltung erreicht wird.

2. Verfahren nach Anspruch 1, dadurch gekennzeichnet, daß das Bezugssteuerkursfehlersignal mit der maximalen Ruderbefehlssignalverstärkung gemessen wird.

3. Verfahren nach Anspruch 1 oder 2, dadurch gekennzeichnet, daß die Kalibrierung des adaptiven Autopiloten die Kalibrierung unter einer Vielzahl von Schiffsbeladezuständen bei der Nenngeschwindigkeit des Schiffes und im wesentlichen ruhiger See einschließt.

4. Verfahren nach einem der vorhergehenden Ansprüche, dadurch gekennzeichnet, daß der vorher ausgewählt Ruderbefehlssignalverstärkungs-Zwischenwert auf einen nächsthöheren Wert vergrößert wird, wenn das aktuelle Steuerkursfehlersignal das Bezugs-Steuerkursfehlersignal um ungefähr 30% übersteigt.

5. Verfahren nach einem der vorhergehenden Ansprüche, dadurch gekennzeichnet, daß ein neues Bezugssteuerkursfehlersignal gemessen wird, wenn ein aktuelles Steuerkursfehler-Spitzensignal ein aktuelles Steuerkursfehler-Effektivwertsignal um einen Faktor von 3 übersteigt und ein aktuelles Steuerkursfehler-Effektivwertsignal größer als ungefähr 1° ist.

6. Verfahren nach Anspruch 5, dadurch gekennzeichnet, daß ein neues Bezugssteuerkursfehlersignal gemessen wird, wenn ein aktuelles Steuerkurs-Änderungsgeschwindigkeits-Spitzensignal ein aktuelles Steuerkurs-Änderungsgeschwindigkeits-Effektivwertsignal um einen Faktor von 3 übersteigt und ein aktuelles Steuerkurs-Effektivwertsignal größer als ungefähr 1° ist.

7. Verfahren nach einem der vorhergehenden Ansprüchen, dadurch gekennzeichnet, daß die Bezugs-Steuerkursfehlersignale und die aktuellen Steuerkursfehlersignale Effektivwertsignale umfassen.

8. Adaptiver Autopilot zur Verwendung in einem Schiff zur Beibehaltung des Steuerkurses unter Verringerung der Vortriebsverluste auf ein Minimum, dadurch gekennzeichnet, daß der Autopilot so kalibriert ist, daß zulässige minimale und maximale Signalverstärkungen festgelegt werden, die auf Ruderbefehlssignale angewandt werden, und daß er Einrichtungen (40) zur Ausbildung einer Vielzahl von zwischen den minimalen und maximalen Ruderbefehlssignalverstärkungen liegenden Ruderbefehlssignalverstärkungs-Zwischenwerten, Einrichtungen (11, 12) zur Messung eines Bezugs-Steuerkursfehlersignals über eine ausgewählte Zeitperiode, Einrichtungen (14) zum nachfolgenden Vergleich des Bezugs-Steuerkursfehlersignals mit einem aktuellen Steuerkursfehlersignal, Einrichtungen (20) zur Vergrößerung oder Verkleinerung der Ruderbefehlssignalverstärkung mit den Zwischenwerten auf einen dieser Werte in Abhängigkeit von dem Vergleich der Bezugs-Steuerkursfehlersignale und der aktuellen Steuerkursfehlersignale zur Lieferung einer optimalen Ruderbefehlssignalverstärkung, die Vortriebsverluste zu einem Minimum macht, und Einrichtungen (40) zur Beibehaltung der optimalen Ruderbefehlssignalverstärkung umfaßt, bis sich ändernde Bedingungen dazu führen, daß der Vergleich der Bezugs-Steuerkursfehlersignale und der aktuellen Steuerkursfehlersignale einen vorgegebenen Grenzwert übersteigt, wodurch die Auswahl einer neuen optimalen Ruderbefehlssignalverstärkung zur Steuerung des Ruders zur Erzielung der Steuerkursbeibehaltung eingeleitet wird.

9. Adaptiver Autopilot nach Anspruch 8, dadurch gekennzeichnet, daß die Kalibrierung des adaptiven Autopiloten die Kalibrierung unter einer Vielzahl von Schiffsbeladezuständen bei der Nenngeschwindigkeit des Schiffes einschließt.

EP 0 189 248 B1

10. Adaptiver Autopilot nach Anspruch 8 oder 9, dadurch gekennzeichnet, daß das Bezugs-Steuerkursfehlersignal bei maximaler Ruderbefehlssignalverstärkung gemessen wird.

11. Adaptiver Autopilot nach einem der Ansprüche 8 bis 10, dadurch gekennzeichnet, daß ein aktueller Verstärkungszwischenwert um 1 vergrößert wird, wenn das aktuelle Steuerkursfehlersignal das Bezugs-Steuerkursfehlersignal um ungefähr 30% übersteigt.

12. Adaptiver Autopilot nach einem der Ansprüche 8 bis 11, dadurch gekennzeichnet, daß ein neues Bezugs-Steuerkursfehlersignal gemessen wird, wenn ein aktuelles Steuerkursfehler-Spitzensignal ein aktuelles Steuerkursfehler-Effektivwertsignal um einen Faktor von 3 übersteigt und ein aktuelles Steuerkursfehler-Effektivwertsignal größer als ungefähr 1° ist.

13. Adaptiver Autopilot nach Anspruch 12, dadurch gekennzeichnet, daß ein neues Bezugs-Steuerkursfehlersignal gemessen wird, wenn ein aktuelles Steuerkurs-Änderungsgeschwindigkeits-Spitzensignal ein aktuelles Steuerkurs-Änderungsgeschwindigkeits-Effektivwertsignal um einen Faktor von 3 übersteigt und ein aktuelles Steuerkursfehler-Effektivwertsignal größer als ungefähr 1° ist.

14. Adaptiver Autopilot nach einem der Ansprüche 8 bis 13, dadurch gekennzeichnet, daß die Bezugssteuerkursfehersignale und die aktuellen Steuerkursfehlersignale Effektivwertsignale umfassen.

**Revendications**

1. Procédé de maintien de cap destiné à réduire au minimum les pertes de propulsion dans un navire utilisant un pilote automatique fonctionnant par adaptation et qui a été étalonné afin qu'il établisse des gains minimal et maximal permis pour les signaux, appliqués aux signaux de commande de gouvernail, caractérisé en ce qu'il comprend les étapes suivantes: l'établissement de plusieurs valeurs intermédiaires de gain de signaux de commande du gouvernail, comprises entre les gains minimal et maximal des signaux de commande de gouvernail, la mesure d'un signal d'erreur de cap de reference pendant une période sélectionnée, la comparaison ultérieure du signal d'erreur de cap de référence à un signal actuel d'erreur de cap, l'augmentation ou la réduction du gain du signal de commande de gouvernail à l'une des valeurs intermédiaires de gain des signaux de commande de gouvernail à la suite de la comparaison des signaux actuel et de référence d'erreur de cap afin qu'un gain optimal pour les signaux de commande de gouvernail soit transmis et réduise au minimum les pertes de propulsion, et le maintien du gain optimal du signal de commande de gouvernail jusqu'à ce que des conditions différentes provoquent le dépassement d'une limite prédéterminée à la suite de la comparaison des signaux actuel et de référence d'erreur de cap, si bien que la sélection d'un nouveau gain optimal de signal de commande de gouvernail est déclenchée pour la commande du gouvernail de manière que le maintien du cap soit assuré.

2. Procédé selon la revendication 1, caractérisé en ce que le signal d'erreur de cap de référence est mesuré pour le gain maximal du signal de commande de gouvernail.

3. Procédé selon la revendication 1 ou 2, caractérisé en ce que l'étalonnage du pilote automatique fonctionnant par adaptation comprend l'étalonnage pour plusieurs conditions de charge d'un navire à une vitesse nominale du navire par mer sensiblement calme.

4. Procédé selon l'une quelconque des revendications précédentes, caractérisé en ce que la valeur de gain intermédiaire du signal de commande de gouvernail qui avait été choisie antérieurement est augmentée jusqu'à la valeur juste supérieure lorsque le signal d'erreur actuel de cap dépasse le signal d'erreur de cap de référence d'environ 30%.

5. Procédé selon l'une quelconque des revendications précédentes, caractérisé en ce qu'un nouveau signal d'erreur de cap de référence est mesuré lorsu'un signal d'erreur actuel de cap de crête dépasse un signal d'erreur efficace actuel de cap d'un facteur 3, et un signal d'erreur efficace actuel de cap dépasse environ 1°.

6. Procédé selon la revendication 5, caractérisé en ce qu'un nouveau signal d'erreur de cap de référence est mesuré lorsu'un signal maximal de vitesse actuelle de variation de cap dépasse un signal efficace de vitesse actuelle de variation de cap d'un facteur 3 et un signal d'erreur efficace actuel de cap dépasse environ 1°.

7. Procédé selon l'une quelconque des revendications précédentes, caractérisé en ce que les signaux d'erreur de cap de référence et actuel sont des signaux efficaces.

8. Pilote automatique fonctionnant par adaptation et destiné à être utilisé dans un navire afin qu'il assure le maintien du cap et réduise au minimum les pertes de propulsion, caractérisé en ce que le pilote automatique est étalonné afin qu'il établisse des gains minimal et maximal permis appliqués aux signaux de commande du gouvernail, et en ce qu'il comporte un dispositif (40) destiné à établir plusieurs valeurs intermédiaires du gain des signaux de commande de gouvernail, comprises entre les gains minimal et maximal des signaux de commande de gouvernail, un dispositif (11, 12) destiné à mesurer un signal d'erreur de cap de référence pendant une période sélectionnée, un dispositif (14) destiné à comparer ensuite le signal d'erreur de cap de référence à un signal d'erreur actuel de cap, un dispositif (20) destiné à augmenter ou réduire le gain du signal de commande de gouvernail parmi les valeurs intermédiaires à l'une de ces valeurs à la suite de la comparaison des signaux d'erreur de cap de référence et actuel de cap afin qu'un gain optimal des signaux de commande de gouvernail soit obtenu et réduise au minimum les pertes de propulsion, et un dispositif (40) destiné à maintenir le gain optimal des signaux de commande de gouvernail jusqu'à ce que d'autres conditions provoquent le dépassement d'une limite prédéterminée à la

15

suite de la comparaison des signaux d'erreur de cap de référence et actuel, si bien que la sélection d'un nouveau gain optimal est déclenchée pour les signaux de commande de gouvernail et permet la commande du gouvernail afin que le maintien du cap soit assuré.

9. Pilote automatique fonctionnant par adaptation selon la revendication 8, caractérisé en ce que l'étalonnage du pilotage automatique fonctionnant par adaptation comprend l'étalonnage dans plusieurs conditions de charge du navire à la vitesse nominale du navire.

10. Pilote automatique fonctionnant par adaptation selon la revendication 8 ou 9, caractérisé en ce que le signal d'erreur de cap de référence est mesuré lorsque le gain du signal de commande de gouvernail est maximal.

11. Pilote automatique fonctionnant par adaptation selon l'une quelconque des revendications 8 à 10, caractérisé en ce que la valeur intermédiaire actuelle du gain est augmentée d'une unité lorsque le signal d'erreur actuel de cap dépasse le signal d'erreur de cap de référence d'environ 30%.

12. Pilote automatique fonctionnant par adaptation selon l'une quelconque des revendications 8 à 11, caractérisé en ce qu'un nouveau signal d'erreur de cap de référence est mesuré lorsqu'un signal de crête d'erreur actuel de cap dépasse un signal efficace d'erreur actuel de cap d'un facteur 3, et un signal efficace d'erreur actuel de cap dépasse environ 1°.

13. Pilote automatique fonctionnant par adaptation selon la revendication 12, caractérisé en ce qu'un nouveau signal d'erreur de cap de référence est mesuré lorsqu'un signal maximal de vitesse actuelle de variation de cap dépasse un signal efficace de vitesse actuelle de variation de cap d'un facteur 3, et un signal efficace d'erreur actuel de cap dépasse environ 1°.

14. Pilote automatique fonctionnant par adaptation selon l'une quelconque des revendications 8 à 13, caractérisé en ce que les signaux d'erreur de cap de référence et actuel sont des signaux efficaces.

FIG. 1.

EP 0 189 248 B1

FIG. 2.